# FASCICULE DE BREVET EUROPEEN

(11) **EP 1 846 162 B1**
(45) Date de publication et mention de la délivrance du brevet: **11.05.2016**
(21) Numéro de dépôt: 06709464.9
(22) Date de dépôt: 31.01.2006
(51) Int. Cl.: G01N 21/64, G01N 21/76, B01L 3/00

(54) **DISPOSITIF D'ANALYSES BIOLOGIQUES AVEC DETECTEUR INTEGRE**
VORRICHTUNG FÜR BIOASSAYS MIT INTEGRIERTEM DETEKTOR
DEVICE FOR BIOASSAYS WITH INTEGRATED DETECTOR

(30) Priorité: 02.02.2005 FR 0550306
(43) Date de publication de la demande: 24.10.2007
(73) Titulaire: Commissariat à l'Énergie Atomique et aux Énergies Alternatives, 75015 Paris (FR); bioMérieux S.A., 69280 Marcy l'Etoile (FR)
(72) Inventeur: POUTEAU, Patrick, F-38240 Meylan (FR); CAMPAGNOLO, Raymond, F-38100 Grenoble (FR); MALLARD, Frédéric, F-38340 Voreppe (FR); GINOT, Frédéric, F-38120 Saint Egreve (FR)
(74) Mandataire: Ahner, Philippe
(86) Numéro de dépôt international: PCT/FR2006/050080
(87) Numéro de publication internationale: WO 2006/082336

(56) Documents cités:
- EP-A- 1 314 472
- WO-A-2004/062801
- US-A- 5 846 392
- US-B1- 6 277 629
- US-B1- 6 325 977

## Description

### DOMAINE TECHNIQUE ET ART ANTÉRIEUR

Le domaine d'application principal de cette invention est celui des « lab-on-chip », ou dispositifs d'analyses intégrés, ou DAI (composant microélectronique dans lequel une ou plusieurs réactions chimiques et/ou biologiques sont réalisées), ou des biopuces (support microélectronique doté de sondes biologiques) utilisées notamment pour la détection ou la caractérisation d'ADN ou de protéines. Elle permet en particulier une lecture intégrée de tels dispositifs.

Les documents US-5 653 939 et 6 325 977 décrivent l'utilisation de capteurs optiques CCD (ou CMOS) comme substrat de réalisation de la partie détection de la biopuce. Les molécules à analyser peuvent être marquées par un marqueur fluorescent ou chimioluminescent.

Pour d'autres DAI, la détection n'est plus optique mais électrique, à partir d'électrons générés par le marqueur associé aux molécules à analyser et qui sont lus directement par le circuit de lecture. On pourra se référer par exemple à l'article de Robin H. Liu et al., « Integrated Microfluidics Biochips for Electrochemical Detection of Multiple Bioagents », 8th International Conference on Miniaturized Systems for Chemistry and Life Sciences, Sept. 26 - 30, 2004, Malmö, Sweden.

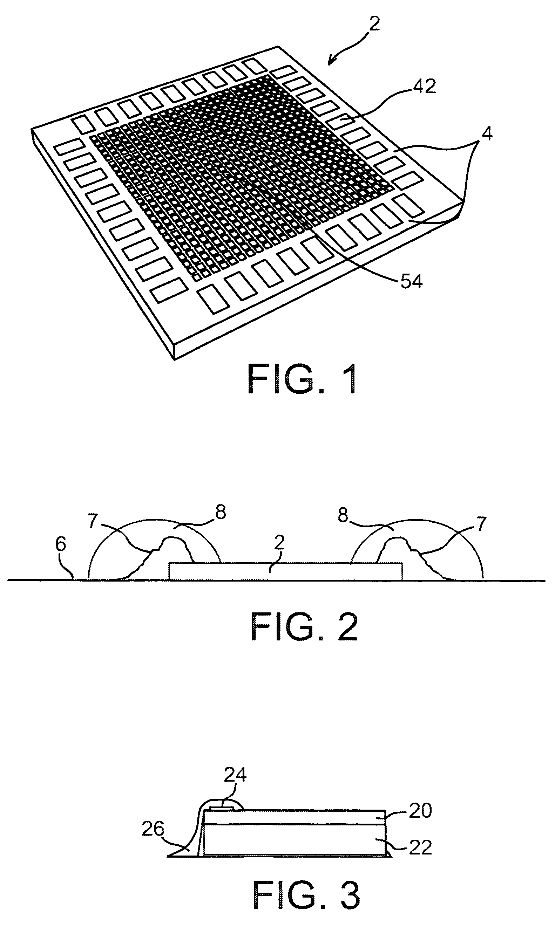

La figure 1 est une vue d'un composant 2 classique d'APS en technologie CMOS. Cette figure donne un exemple concret des surfaces utiles en face avant d'un composant 2 de détection. Par composant, on entend le substrat portant les moyens de détection 54 et les moyens de traitement intégrés associés. Sont présentes, sur la même face avant, la matrice des pixels 54 passivés et les plots métalliques 42 de reprise de contacts électriques.

Les zones 4 regroupant l'ensemble des plots de contact 42 prennent une place conséquente sur la face avant de ce composant. Suivant les types de composants et leurs applications, on peut retrouver les zones de contact sur les quatre bords du composant, ou sur trois, ou deux ou même sur un côté du composant. Ces zones réservées peuvent être d'une largeur allant jusqu'à 500 µm suivant les technologies de fabrication ou suivant les technologies de reprise de contacts électriques.

Le positionnement de ces contacts sur la même face du composant que celle portant les moyens 54 de détection optique et proches de celui-ci pose un certain nombre de problèmes :
- ces contacts sont constitués de métaux (or, platine, aluminium ou amalgame ...). Ces métaux se retrouvent à la surface du composant. Pour des applications de détection intégrée, l'étape de fabrication suivant la réalisation des contacts électriques consiste à réaliser la fonctionnalisation des surfaces de détection en réalisant des étapes chimiques d'immobilisation des sondes biologiques. Or la plupart des procédés chimiques de fonctionnalisation comportent des étapes d'oxydation, de réduction ou des étapes en phase acide qui sont, à un moment ou à un autre, agressives vis-à-vis des métaux. Plusieurs de ces étapes altèrent la nature de ces métaux, il peut même y avoir destruction complète du contact.

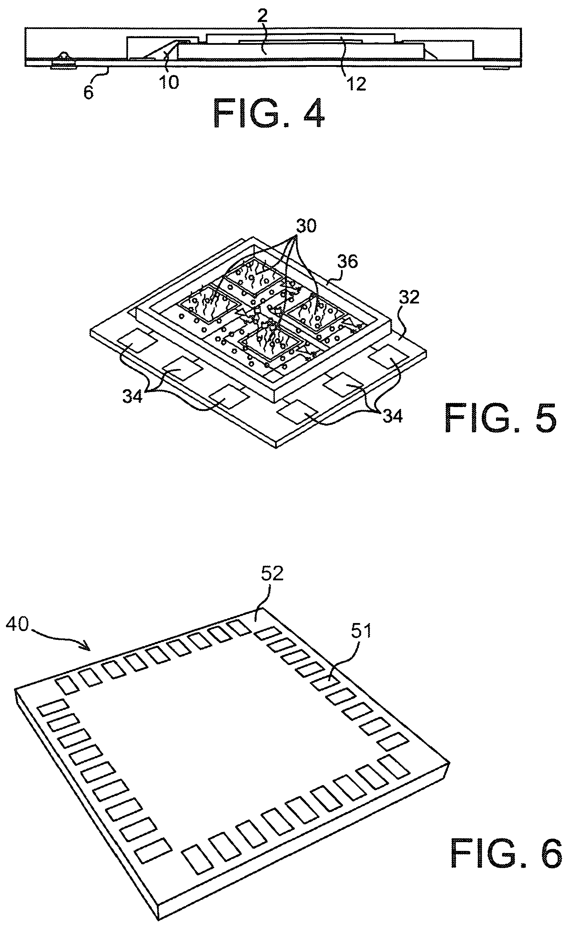

Il est donc difficile, voir impossible, de dépassiver les plots de contact avant la fonctionnalisation. Or, la dépassivation avant fonctionnalisation permet de tester la fonctionnalité du circuit électronique de lecture, étape importante pour assurer la qualité d'un processus industriel. Réciproquement, si la dépassivation est réalisée après la fonctionnalisation, elle peut dégrader les sondes biologiques car elle nécessite des étapes technologiques agressives, par exemple de gravure.
- une fois les composant fonctionnalisés, les contacts électriques doivent être repris sur un autre support (film mémoire, par exemple un PCT (polycarbonate bench) 6 ou autre, voir figures 2 et 4). Or si on intègre l'ensemble du composant (reprise de contacts comprise) dans la partie fluidique du dispositif d'analyse intégré (ou DAI), on doit passiver les contacts et leurs reprises 7 pour éviter tout court-circuit entre les différents contacts ou toute altération des connexions électriques. Ceci peut se faire par des résines ou polymères de passivation 8 (figure 2), ce qui créé des surépaisseurs (plusieurs centaines de microns) dans la partie fluidique du DAI, qui perturbent l'écoulement fluidique. Ceci apporte en outre des contraintes importantes pour la fermeture fluidique du composant.

Dans une autre configuration, illustrée en figure 4, la partie connexion 10 du composant est positionnée en dehors de la partie fluidique 12. Cette solution pose des problèmes d'assemblage étanche, de place perdue pour la réalisation de cette étanchéité entre la zone sensible de la puce et la zone de connexion, de perturbation de l'écoulement fluidique et aussi de précision d'assemblage.
La figure 3 représente une autre configuration connue, dans laquelle une couche 20 de détection optique sur un substrat 22 comporte des contacts latéraux 24 recouverts d'une colle conductrice 26 et d'une résine de passivation.
La figure 5 représente une autre configuration connue, dans laquelle des moyens de détection optique sont formés sur un substrat 32, des contacts latéraux 34 étant isolés de la zone fluidique, délimitée par des parois 36.

Pour tous ces dispositifs, se posent les problèmes déjà évoqués ci-dessus.

Il se pose également le problème de l'intégration des fonctions fluidiques nécessaires à la préparation de l'échantillon biologique avec les fonctions de détection.

Un but de la présente invention est de fournir un nouveau type de dispositif d'analyse biologique, à moyens de détection optique et/ou électrique, permettant de ne pas limiter ou perturber l'écoulement fluidique d'un échantillon à analyser.

Un autre but de la présente invention est de réaliser un dispositif dont on puisse tester la fonctionnalité électronique avant et/ou après fonctionnalisation.

### EXPOSÉ DE L'INVENTION

L'invention concerne un dispositif d'analyse biologique comportant :
- des moyens de circulation d'un fluide à analyser, comprenant une chambre fluidique,
- des moyens de détection, à base de semi-conducteur, ou réalisés dans un matériau semi-conducteur ou dans une puce semi-conductrice, comportant une face avant de détection, destinée à être en contact avec le fluide à analyser dans la chambre fluidique, une face arrière, et des plots de contacts électriques situés sur cette face arrière.

Selon l'invention, on utilise donc un ou des détecteurs dont les plots de contacts électriques sont reportés en face arrière de la puce.

Ceci permet, en face avant, de n'avoir que la partie de détection, recouverte éventuellement d'une couche de passivation, par exemple une couche en nitrure de silicium ou en oxyde de silicium.

On peut également avoir, en face avant, des dispositifs électroniques de traitement au niveau d'un ou plusieurs pixels. Le contact extérieur avec ces éléments est assuré via les plots de contact situés en face arrière.

Une telle utilisation facilite les étapes de fabrication des sondes biologiques sur la surface du composant comportant les moyens de détection et améliore les possibilités d'intégration d'une technologie de détection dans un DAI, en particulier dans sa partie microfluidique.

Selon l'invention, on peut donc utiliser des technologies de détecteurs, par exemple de type CMOS ou CCD ou NMOS ou biCMOS ; ces détecteurs peuvent éventuellement être disposés en matrice, avec reprise de contact électrique en face arrière.

La face avant peut être fonctionnalisée par des sondes biologiques et/ou chimiques.

Les moyens de détection peuvent être de type optique, par exemple des moyens de détection de fluorescence, pouvant éventuellement comporter un filtre en longueur d'onde.

Les moyens de détection sont, par exemple encore, des moyens de détection de bioluminescence ou de chimioluminescence, pouvant comporter des sondes biologiques marquées avec une enzyme apte à émettre un photon au contact d'une molécule spécifique contenue dans le fluide à analyser.

Selon une variante, les moyens de détection sont des moyens de détection électrique, par exemple des moyens électrochimiques.

De préférence, les moyens de détection affleurent la chambre fluidique au niveau d'une surface d'écoulement d'un fluide.

Des moyens d'étanchéité peuvent être prévus autour des moyens de détection, ou dans une zone à proximité de ces moyens de détection, ou dans une zone d'insertion des moyens de détection dans la chambre.

Le pourtour du composant et/ou la chambre fluidique peut avantageusement comporter des plans d'appui.

Un dispositif selon l'invention peut comporter en outre des moyens de chauffage du côté de la face arrière des moyens de détection, à savoir en contact avec les, ou en regard des, ou intégrés aux, moyens de détection.

Des moyens de lecture, disposés en contact des plots en face arrière du composant de détection, permettent de lire des signaux lors d'une utilisation du dispositif.

En outre, un film mémoire peut être disposé en contact des plots en face arrière du composant.

Les plots de contact sont prévus compatibles avec une interconnexion directe des moyens de détection et d'un lecteur extérieur, par exemple de type carte à puce.

L'invention concerne également une utilisation d'un dispositif selon l'invention, pour la réalisation d'analyses biologiques.

### BRÈVE DESCRIPTION DES DESSINS

- Les figures 1 à 5 représentent des dispositifs connus,
- la figure 6 représente la face arrière d'un composant selon l'invention,

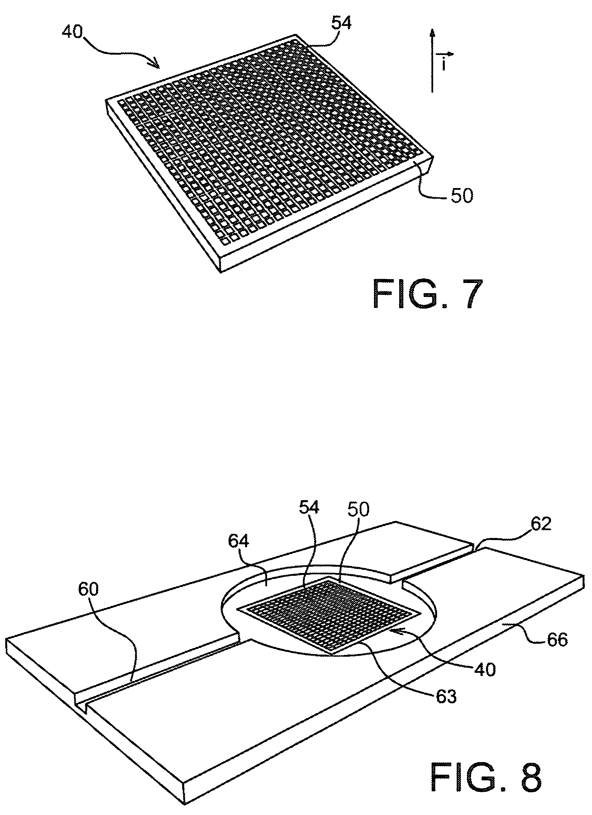

- la figure 7 représente la face avant d'un composant selon l'invention,
- la figure 8 représente un DAI selon l'invention, vu en face avant,

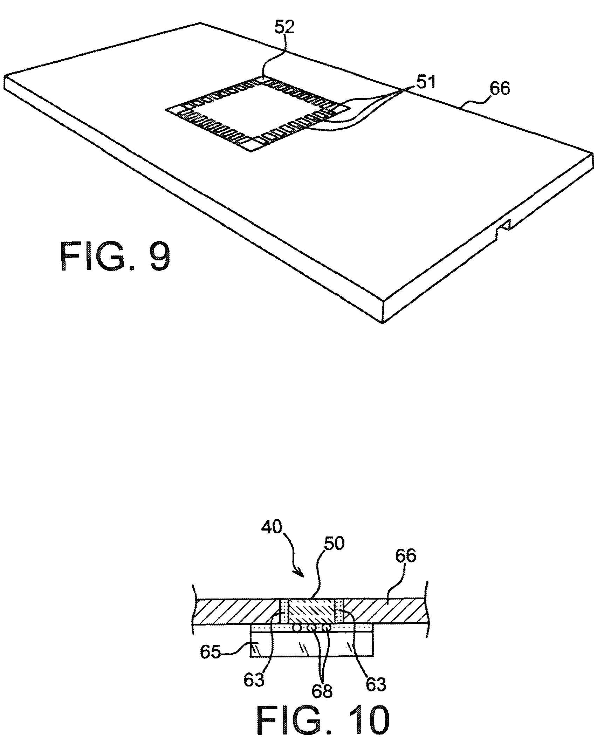

- la figure 9 représente un DAI selon l'invention, vu en face arrière,
- la figure 10 représente une vue en coupe d'un composant selon l'invention, inséré dans un substrat,

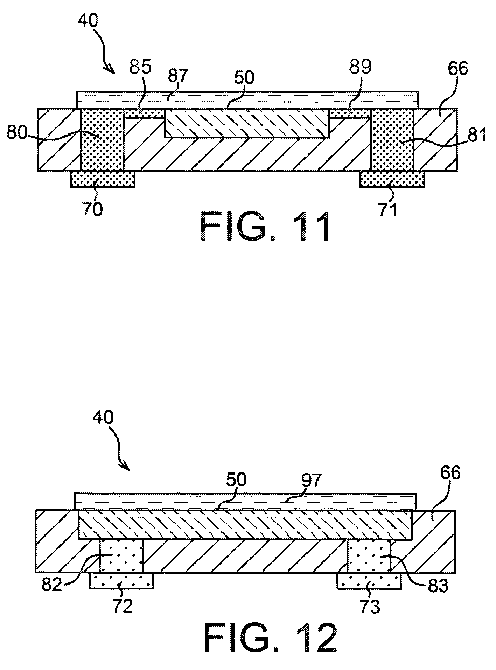

- la figure 11 représente une vue en coupe d'un composant selon l'invention, inséré dans un substrat, avec contacts traversant le substrat,
- la figure 12 représente une vue en coupe d'un composant selon l'invention, inséré dans un substrat, avec contacts ne traversant pas complètement le substrat,

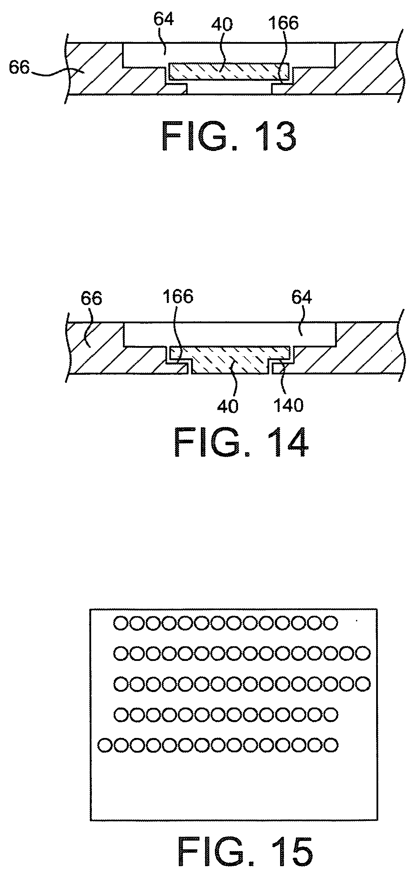

- la figure 13 représente une vue en coupe d'un composant selon l'invention, inséré dans un substrat dans lequel des plans d'appui ont été réalisés,
- la figure 14 représente une vue en coupe d'un composant selon l'invention, avec plans d'appuis, inséré dans un substrat dans lequel des plans d'appui ont été réalisés,
- la figure 15 est un exemple d'image obtenue lors d'une expérience d'hybridation d'un composant à ADN par un oligonucléide couplé HRP,

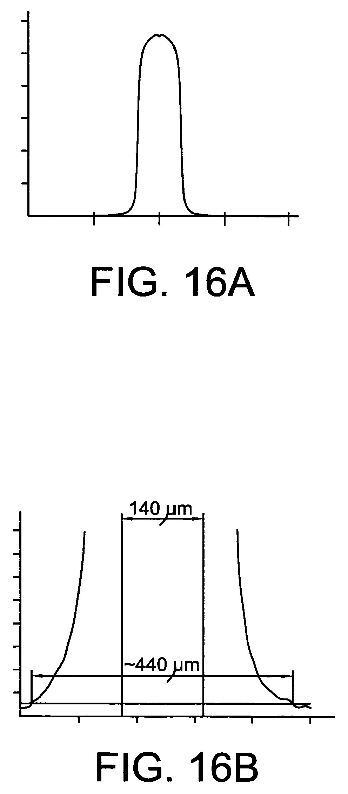

- les figures 16A et 16B illustrent les résultats obtenus lors d'une expérience de mesure de la diffusion moléculaire avant émission de photons, à l'aide d'un dispositif selon l'invention.

### EXPOSÉ DÉTAILLÉ DE MODES DE RÉALISATION PARTICULIERS

Un exemple de composant pouvant être mis en oeuvre dans le cadre de l'invention est illustré sur les figures 6 (face arrière) et 7 (face avant).

Il s'agit d'une puce « APS » (« active pixel sensor »), c'est-à-dire comportant, au niveau des pixels 54, des fonctions électroniques intégrées de lecture et de traitement de l'information du pixel, avec plots métalliques dépassivés 51 de reprise de contact en face arrière 52 (figure 6).

La face avant 50 du composant rassemble les fonctions d'un composant de détection optique et/ou électrique, par exemple en CMOS ou en toute autre technologie basée sur un semi-conducteur (NMOS, BiCMOS...). Ce peut être aussi un élément d'une matrice de détection CCD.

Des exemples de technologies CMOS ou MEMS ou CCD avec reprise de contact en face arrière sont donnés dans l'article de J. F. Kuhmann, intitulé "Through Wafer Interconnects and Flip-Chip Bonding: A Toolbox for Advanced Hybrid Technologies for MEMS", EUROSENSORS XIII, 13th European conference on Solid-State Transducers, pp. 265-72 (The Hague 1999). ISBN : 90-76699-01-1.

La face avant 50 peut être passivée par une couche d'oxyde de silicium ou de nitrure de silicium. Sur la face arrière 52 (figure 6) apparaissent des plots de contact 51 qui permettent de réaliser une liaison électrique entre ce composant et un lecteur extérieur via, ou non, un dispositif intermédiaire (film, mémoire...) sur un circuit de lecture.

Un circuit de traitement électronique associé peut être lui aussi réalisé en face avant 50 et remplit diverses fonctions, comme par exemple : adressage, et/ou amplification, et/ou convertisseur analogique ou numérique.... Un tel circuit est passivé.

Un dispositif d'analyse intégré selon l'invention est illustré sur les figures 8 et 9.

La figure 8 est une vue schématique d'un DAI en technologie double face, dans laquelle un composant 40 selon l'invention est inséré dans la partie fluidique, constituée de canaux 60,62 et d'une ouverture 64 réalisée dans un substrat 66.

Avantageusement, et comme illustré sur la figure 10, le composant 40, en contact avec le fluide par sa face avant 50, est assemblé par la tranche, dans le fond de la zone 64 au moyen d'une colle 63 assurant par ailleurs l'étanchéité de la partie fluidique. Un film mémoire 65 peut être positionné en face arrière (côté non exposé au fluide), relié au composant par des plots de contacts 68.

Avantageusement encore, le composant affleure à la surface de la partie fluidique, comme cela est d'ailleurs apparent sur la figure 10 : la face avant 50 est au même niveau que la face du substrat 66 sur laquelle s'écoule le fluide.

L'écoulement fluidique ne rencontre ainsi aucune aspérité. Aucune place n'est réservée pour des contacts électriques en surface.

En face arrière (figure 9) les contacts électriques 51 sont directement accessibles. Ils peuvent être connectés par exemple à un film mémoire.

Les connexions électriques sont réalisées à travers le composant 40, sans connexions accessibles en face avant 50 comme sur la figure 1. Or c'est sur cette face avant que les fluides à analyser s'écouleront.

Deux exemples de réalisation d'un tel dispositif sont donnés en figures 11 et 12.

Sur ces figures, la référence 40 désigne toujours le composant de détection utilisé.

Il est relié, à des plots de contact 70-73, par des contacts 80-83 qui traversent complètement tout le substrat 66 (figure 11) ou pas (figure 12). Une couche de passivation 87, 97 recouvre la surface de détection 50. Les autres références numériques correspondent aux éléments déjà explicités précédemment.

Dans le mode de réalisation de la figure 11 les contacts 80, 81 sont, eux aussi, en face avant, recouverts par la couche de passivation 87. Cette structure met en outre en oeuvre des reprises de contact 85, 89, entre les contacts 80, 81 et le composant, reprises également situées sous la couche de passivation.

Le mode de réalisation de la figure 12 permet d'utiliser un composant de surface de détection 50 plus importante.

Le matériau d'interconnexion peut être en or ou en alliage titane-Or, ou en nickel... etc.

Avec un tel dispositif, il n'est plus nécessaire de prendre en compte la nature métallique des plots 54 puisque, en face avant 50 du composant, on n'a accès qu'à la couche de passivation, par exemple en nitrure de silicium ou en dioxyde de silicium, de la matrice de pixels et du circuit de traitement électronique associé.

Toutes les chimies de fonctionnalisation fonctionnant sur lame de microscope peuvent être envisagées sur la couche de passivation.

Du point de vue fluidique, la surface 50 du composant, lorsqu'elle affleure la partie fluidique, ne présente aucune aspérité causée par la reprise de contact électrique et sa passivation associée. Ceci ne nécessite aucune étude ou mise au point complémentaire vis-à-vis des écoulements fluidiques. Le composant peut néanmoins, si on le souhaite, dépasser dans la chambre fluidique.

Du point de vue des assemblages, dans la direction perpendiculaire au plan principal du composant (direction i de la figure 7), on ne réserve plus une zone mal définie pour les reprises de contacts (comme dans la figure 4) et leurs passivations. L'assemblage peut par exemple être réalisé par un joint étanche entre la partie fluidique du secteur et la tranche du composant de détection.

On peut, grâce à cette technologie, réaliser des modes d'assemblage d'un composant de détection dans une biopuce, beaucoup plus simplement que dans l'art antérieur.

On peut en particulier, comme illustré sur les figures 13 et 14, réaliser des plans d'appui 166 dans le substrat 66 dans lequel la partie fluidique 64 est réalisée (figures 13 et 14) et/ou des plans d'appui 140 définis sur le pourtour du composant (figure 14), ce qui permet de faciliter l'assemblage de la puce de détection dans la partie fluidique du dispositif d'analyse biologique.

Compte tenu de l'utilisation en usage unique qui est envisagée pour ce type de DAI, il est par ailleurs possible de réaliser la reprise des contacts électriques par un « lecteur » extérieur, de type lecteur de carte à puce, directement en contact avec les plots 54, en face arrière de la puce, et non par l'intermédiaire d'un film mémoire permettant de reporter les contacts. La dimension de ces plots peut être adaptée pour faciliter la reprise des contacts par des outils standards.

La surface entière de la face 52 arrière du composant est à cette fin disponible.

En règle générale la surface active du composant est supérieure à la surface nécessaire pour reprendre les contacts électriques, il y a donc suffisamment de surface sur la face arrière 52 du composant pour réaliser l'ensemble des contacts électriques et même des plots de contact électrique plus grands, compatibles avec le lecteur final, comme ceux classiquement utilisés pour reprendre contact sur une carte à puce.

La suppression du film mémoire permet de supprimer les contraintes liées à l'utilisation de ce film (alignement, tenue mécanique, thermique). Elle facilite l'assemblage du dispositif d'analyse biologique.

Une résistance chauffante peut être prévue en face arrière du composant pour contrôler la température au niveau de la chambre fluidique. Avantageusement, elle pourra être réalisée avec la même technologie que celle utilisée pour la réalisation des plots de contact. En variante, on pourra utiliser une résistance chauffante extérieure (solidaire du lecteur par exemple) ; la suppression du film mémoire permettra, dans ce cas, un contact thermique direct avec le composant, permettant un meilleur contrôle de la température au niveau de la chambre fluidique.

Selon un autre aspect, il est possible d'augmenter considérablement la surface des plots de connexion compte-tenu de la surface disponible sur la face arrière 52 du composant. Ceci peut permettre de relâcher les contraintes de connectique (alignement, tenue mécanique, tenue en température...).

La face avant d'un composant selon l'invention peut être fonctionnalisée par des sondes biologiques (ADN, ou protéine, ou sucre), puis utilisée comme dispositif d'analyse biologique intégré. Les fonctionnalités électriques du composant peuvent à tout moment, avant ou après fonctionnalisation, être testées par l'intermédiaire des plots de contact face arrière.

On peut ainsi lire une biopuce à ADN, protéine ou autre ligand de façon intégrée, comme décrit dans le document « Opto electronic DNA chip : high performance chip reading with an all electric interface, F. Mallard et al » disponible sur le site Internet suivant : www.sparksdesigns.co.uk/biopapaers04/posters.asp

On peut aussi mettre en oeuvre toute détection de molécules, et notamment organiques, telle que décrite dans les documents US 5 653 939 ou US 6 325 977, et ce grâce à des moyens de détection optique, par exemple par fluorescence ou bioluminescence ou chimioluminescence, ou électriques.

Six exemples vont maintenant être donnés. Dans ces exemples, le terme « composant » signifie un composant selon la présente invention :

### Exemple 1 - Fonctionnalisation d'une matrice de photo-détecteurs.

La surface des composants APS utilisés est recouverte d'une couche de passivation en nitrure de silicium. Des oligonucléotides de capture sont greffés à la surface de l'APS par l'intermédiaire d'un silane porteur de groupement réactifs.

### 1-1 : Création de groupements SiOH sur la surface de l'APS :

Les composants sont soumis à un plasma O₂ de 500 W pendant 1 minute. Alternativement, les composants sont incubés pendant deux heures dans un mélange NaOH, H₂O, Ethanol en proportions massiques 1 :3 :4 (traitement « Brown ») puis lavés abondamment à l'eau et séchés sous flux d'azote.

### 1-2 : Silanisation :

Les composants sont incubés pendant 24 heures à température ambiante dans un mélange éthanol absolu +10 % 3-aminopropyltriethoxysilane. Ils sont ensuite rincés plusieurs fois à l'éthanol, dont une fois avec sonication pendant 5 minutes, puis séchés sous flux d'azote et incubés pendant 3 heures à 110°C (recuit).

### 1-3 : Pré-activation :

Les composants sont immergés dans une solution de KOH (7,5 % en masse dans l'eau) puis rincées abondamment à l'eau. Cette étape permet de régénérer les regroupements NH₂ des silanes qui ont éventuellement été protonés (NH₃⁺, moins réactifs dans l'étape suivante).

### 1-4 : Activation :

Les composants sont immergés pendant 90 minutes à température ambiante dans une solution de glutaraldehyde à 20 % dans l'eau. Ils sont ensuite abondamment rincés à l'eau puis séchés sous flux d'azote.

### 1-5 : Fixation des oligonucléotides de capture :

Une sonde de capture portant un regroupement amine est alors diluée à 10 µM final dans du tampon de dépôt (300 mM Na₂HPO₃, pH 7.8, 10 % glycérol), puis déposée sur la surface du composant à l'aide d'un robot spotteur Karl Züss muni d'une aiguille piezo-électrique. Le volume de dépôt est de l'ordre de 300 pL et le diamètre de la goutte est d'environ 140 µm.

Dans l'exemple 2, la sonde de capture utilisée est le 20mer(5') AATAGTACTTTCCTGATTCC(3')-NH₂.

Les dépôts restent en contact avec la surface des composants pendant la nuit, puis les composants sont lavés trois fois avec le tampon de dépôt avant traitement post-immobilisation.

### 1-6 : Traitement post-immobilisation :

Les composants sont incubés pendant 1 heure à température ambiante et sans agitation dans une solution aqueuse de NaBH₄ à 90 mM, rincés à l'eau pendant 5 minutes, dans une solution 0.2 % SDS pendant 5 minutes, à nouveau à l'eau pendant 5 minutes, puis séchés sous flux d'azote.

### Exemple 2 - Expérience d'hybridation d'une puce à ADN par un oligonucléotide couplé HRP.

Sur un composant fonctionnalisé selon le protocole décrit dans l'exemple 1, on hybride en goutte à 37°C pendant 30 minutes 10 nM d'oligonucléotide de détection couplé HRP, complémentaire de la sonde de détection (ici : (5')GGAATCAGGAAAGTACTATT(3')-HRP) en tampon d'hybridation (Tris 100 mM pH 8.0, EDTA 1mM, NaCl 1M, triton X-100 0.05%).

La surface des composants est ensuite lavée trois fois avec du tampon d'hybridation, puis les composants sont montés sur leur dispositif de lecture (kit de test pour les puces VV5501 de STMicroélectronics). Le substrat de chimioluminescence Pierce ELISA Femto Maximum Sensitivity est déposé en goutte sur la surface, le composant est mis à l'obscurité, puis 64 images non saturées des spots luminescents sont acquises.

Après acquisition du signal, la luminescence est éteinte par ajout d'eau de javel (oxydation rapide de tous les luminols présents), puis 64 images sont acquises avec les mêmes réglages de caméra (acquisition des images de noir).

L'image finale des spots est la différence entre les moyennes des 64 images de signal et des 64 images de noir.

La figure 15 est un exemple d'image finale. Cinq lignes de spots (pas inter-spots : 200 µm, pas inter-lignes : 400 µm, diamètre des spots : ∼ 140 µm sont visibles.

### Exemple 3 - Mesure de la diffusion moléculaire avant émission des photons.

Le détail du mécanisme réactionnel du couple HRP/Luminol met en évidence que l'espèce émettrice de photons, comme les espèces qui lui donnent naissance, diffusent librement en solution (seule la première étape de la chaîne réactionnelle est dépendante de la HRP). La taille d'un spot observé en chimioluminescence devrait donc être supérieure à sa taille réelle. Ceci a une influence sur la densité maximum de sites biologiques qu'il est possible de mettre sur la matrice de photodétecteurs.

Il a été tenté de quantifier la distance de diffusion des espèces émettrices de photons : sur une image similaire à celle présentée en figure 15 (image non saturée, densité surfacique de sonde de détection saturante pour le signal), le profil d'intensité d'un spot a été tracé.

La différence entre le diamètre moyen du spot (estimé par sa largeur de pic à mi-hauteur) et le diamètre de diffusion du spot (zone d'intensité lumineuse supérieure à un millième de l'intensité maximale sur le spot) a pu ainsi être mesurée.

Les figures 16A et 16B illustrent le résultat obtenu : les distances le long des lignes sont reportées en abscisse et les intensités lumineuses en niveaux de gris, en ordonnée. La figure 16B représente un agrandissement de la base du pic pour la mesure graphique du diamètre apparent du spot, à 1/1000 de l'intensité maximale.

Dans le cas illustré en figures 16A et 16B, la taille « réelle » du spot est de 140 µm tandis que le spot diffusif a un diamètre de 440 µm.

### Exemple 4 - Analyse complète d'un échantillon biologique.

Cet exemple concerne le déroulement général du traitement d'un échantillon et d'une hybridation.

Un composant est obtenu selon l'une des méthodes décrites à l'exemple 1.

Un échantillon biologique est traité pour extraire et purifier les acides nucléiques d'intérêt, puis les amplifier selon les techniques de l'état de l'art, par exemple les méthodes décrites dans Troesch et al., Journal of Clinical Biology, 1999, 37, 49-55.

Les acides nucléiques amplifiés sont ensuite marqués à la biotine sur les groupements phosphates de l'ADN et clivés en petits fragments, selon la méthode décrite dans « Procédé de marquage et de fragmentation d'ADN », demande de brevet FR - 2 824 335. Ces acides nucléiques marqués et clivés sont ensuite purifiés, selon les techniques classiques de l'état de l'art, pour éliminer l'excès de marqueur (voir par exemple Monnot et al., Nucléos. Nucleot & Nucleic acids, 2001, 20(4-7), 1177-1179).

Les acides nucléiques amplifiés, marqués, clivés, sont ensuite hybridés sur le composant pendant 30 minutes selon les techniques de l'art citées ci-dessus (Troesch et al. 1999). Le composant hybridé est ensuite lavé de façon à éliminer les acides nucléiques non accrochés spécifiquement au composant, toujours selon les méthodes de l'art.

Un conjugué streptavidine/HRP est alors déposé sur le composant à une concentration de 10 à 20 nM pendant 5 à 15 minutes, puis le composant est à nouveau lavé de façon à éliminer les conjugués non complexés spécifiquement à des acides nucléiques marqués à la biotine.

Le substrat de chimioluminescence Pierce ELISA Femto Maximum Sensitivity y est alors introduit sur la puce, et on suit ensuite le traitement décrit dans l'exemple 2 ci-dessus.

### Exemple 5 - Fonctionnalisation d'une matrice de photodétecteur par voie photochimique.

L'exemple 1 ci-dessus montre une fonctionnalisation du composant par spotting.

Cependant, il est possible d'utiliser les autres procédés de fonctionnalisation actuellement en vigueur dans le domaine des composants de type biopuces.

En particulier, un mode préférentiel de fabrication du composant est d'utiliser un procédé de fonctionnalisation adressé par la lumière, comme la pratique la société Affymétrix (cf. Fodor et al. Science, 1991, 251, 767-773, ou encore Pease et al., Proc. Nat. Acad. Sci. USA, 1994, 91, 5022-5026). Ce procédé, dérivé des procédés de la microélectronique, utilise une succession d'insolations (UVA) et de réactions chimiques sur un wafer de verre ou de silice pour fabriquer un composant de peptides ou d'oligonucléotides.

Les procédés de fabrication des matrices de photodétecteurs utilisent aux aussi les techniques de microélectronique, en particulier des étapes de dépôts de couches minces, d'insolation (UVA) et de gravure, sur substrat de silicium.

Ainsi, un procédé industriel de fabrication peut être le suivant :
- fabrication de substrats portant des matrices de photodétecteurs APS, selon les spécifications souhaitées (taille et disposition des pixels, nature de la couche de passivation, firmware intégré à la puce, ...).
- fonctionnalisation des substrats,
- découpage et conditionnement.

### Exemple 6 - Cas de fluorescence.

On excite par un faisceau de longueur d'onde adapté la face de détection fonctionnalisée. Un faisceau de fluorescence de longueur d'onde différente est réémis et lu au niveau de la face de détection.

Avantageusement, on prévoit dans ce cas de rajouter, sur la face de détection optique, un filtre en longueur d'onde réfléchissant à la longueur d'onde d'excitation et transparent à la longueur d'onde de fluorescence.

## Revendications

1. Dispositif d'analyse biologique comportant :
- des moyens (60, 62, 64) de circulation d'un fluide à analyser, comprenant une chambre fluidique, **caractérisé en ce qu'**il comporte :
- un substrat comportant une surface d'écoulement d'un fluide et une ouverture (64),
- des moyens (40), à base de semi-conducteur, pour réaliser une détection optique, comportant une face avant (50) de détection, destinée à être en contact avec le fluide à analyser dans la chambre fluidique, une face arrière (52), et des plots (54, 70, 71, 72, 73) de contacts électriques situés sur cette face arrière, et qui apparaissent sur cette face arrière,
- les moyens pour réaliser une détection optique étant insérés dans ladite ouverture (64), et affleurant la chambre fluidique au niveau de ladite surface d'écoulement d'un fluide.

2. Dispositif selon la revendication 1, la face avant (50) étant fonctionnalisée par des sondes biologiques et/ou chimiques.

3. Dispositif selon la revendication 1 ou 2, les moyens pour réaliser une détection optique étant des moyens de détection de fluorescence.

4. Dispositif selon la revendication 3, comportant en outre un filtre en longueur d'onde.

5. Dispositif selon la revendication 1 ou 2, les moyens pour réaliser une détection optique étant des moyens de détection de bioluminescence ou de chimioluminescence.

6. Dispositif selon l'une des revendications 1 à 5, comportant des sondes biologiques marquées d'une enzyme apte à émettre un photon au contact d'une molécule spécifique d'un fluide à analyser.

7. Dispositif selon l'une des revendications 1 à 6, la face avant des moyens pour réaliser une détection optique comportant une matrice de pixels de détection.

8. Dispositif selon la revendication 7, comportant des moyens électroniques de traitement au niveau de chaque pixel et/ou et de la matrice.

9. Dispositif selon l'une des revendications 1 à 8, comportant en outre une couche de passivation (87, 97) en face avant (50).

10. Dispositif selon la revendication 9, la couche de passivation étant en nitrure de silicium ou en oxyde de silicium.

11. Dispositif selon l'une des revendications précédentes, comportant en outre des moyens d'étanchéité (41, 63) de la chambre fluidique, dans une zone à proximité des moyens pour réaliser une détection optique ou dans une zone d'insertion, dans la chambre, des moyens pour réaliser une détection optique.

12. Dispositif selon l'une des revendications précédentes, le pourtour des moyens (40) pour réaliser une détection optique comportant des plans d'appui (140).

13. Dispositif selon l'une des revendications précédentes, la chambre fluidique comportant des plans d'appuis (166).

14. Dispositif selon l'une des revendications précédentes, comportant en outre des moyens de chauffage du côté de la face arrière (52) des moyens (40) pour réaliser une détection optique.

15. Dispositif selon l'une des revendications précédentes comportant en outre un film mémoire disposé en contact des plots (54, 70, 71, 72, 73) en face arrière des moyens (40) pour réaliser une détection optique.

16. Dispositif selon l'une des revendications précédentes, les plots de contact permettant une interconnexion directe des moyens pour réaliser une détection optique et d'un lecteur extérieur.

17. Utilisation d'un dispositif selon l'une des revendications précédentes pour la réalisation d'analyses biologiques.

## Patentansprüche

1. Vorrichtung zur biologischen Analyse, enthaltend:
- Mittel (60, 62, 64) zur Zirkulation eines zu analysierenden Fluids mit einer Strömungskammer,
**dadurch gekennzeichnet, dass** sie enthält:
- ein Substrat mit einer Abströmfläche für ein Fluid und einer Öffnung (64),
- Mittel (40) auf Haltleiterbasis, um eine optische Erfassung durchzuführen, enthaltend eine Vorderseite (50) für die Erfassung, die dazu bestimmt ist, in der Strömungskammer das zu analysierende Fluid zu kontaktieren, eine Hinterseite (52) und elektrische Kontaktzapfen (54, 70, 71, 72, 73) von elektrischen Kontaktstücken, die an dieser Hinterseite liegen, und die auf dieser Hinterseite erscheinen,
- wobei die Mittel zum Durchführen einer optischen Erfassung in die Öffnung (64) eingesetzt sind und im Bereich der Fluid-Abströmfläche mit der Strömungskammer bündig sind.

2. Vorrichtung nach Anspruch 1, wobei die Vorderseite (50) mit biologischen und/oder chemischen Sonden funktionalisiert ist.

3. Vorrichtung nach Anspruch 1 oder 2, wobei die Mittel zum Durchführen einer optischen Erfassung Mittel zur Detektion von Fluoreszenz sind.

4. Vorrichtung nach Anspruch 3, ferner enthaltend ein Wellenlängenfilter.

5. Vorrichtung nach Anspruch 1 oder 2, wobei die Mittel zum Durchführen einer optischen Erfassung Mittel zur Detektion von Biolumineszenz oder Chemilumineszenz sind.

6. Vorrichtung nach einem der Ansprüche 1 bis 5, enthaltend biologische Sonden, die mit einem Enzym markiert sind, das dazu geeignet ist, ein Photon in Kontakt mit einem spezifischen Molekül eines zu analysierenden Fluids zu emittieren.

7. Vorrichtung nach einem der Ansprüche 1 bis 6, wobei die Vorderseite der Mittel zum Durchführen einer optischen Erfassung eine Detektions-Pixelmatrix aufweisen.

8. Vorrichtung nach Anspruch 7, enthaltend elektronische Verarbeitungsmittel im Bereich eines jeden Pixels und/oder der Matrix.

9. Vorrichtung nach einem der Ansprüche 1 bis 8, ferner enthaltend eine Passivierungsschicht (87, 97) an der Vorderseite (50).

10. Vorrichtung nach Anspruch 9, wobei die Passivierungsschicht aus Siliciumnitrid oder aus Siliciumoxid besteht.

11. Vorrichtung nach einem der vorangehenden Ansprüche, ferner enthaltend Dichtungsmittel (41, 63) zum Abdichten der Strömungskammer in einem Bereich nahe bei den Mitteln zum Durchführen einer optischen Erfassung oder in einem Einfügebereich der Mittel zum Durchführen einer optischen Erfassung in die Kammer.

12. Vorrichtung nach einem der vorangehenden Ansprüche, wobei der Umfang der Mittel (40) zum Durchführen einer optischen Erfassung Abstützebenen (140) aufweisen.

13. Vorrichtung nach einem der vorangehenden Ansprüche, wobei die Strömungskammer Abstützebenen (166) aufweist.

14. Vorrichtung nach einem der vorangehenden Ansprüche, ferner enthaltend Heizmittel an der Hinterseite (52) der Mittel (40) zum Durchführen einer optischen Erfassung.

15. Vorrichtung nach einem der vorangehenden Ansprüche, ferner enthaltend eine Speicherfolie, die in Kontakt mit den Zapfen (54, 70, 71, 72, 73) an der Hinterseite der Mittel (40) zum Durchführen einer optischen Erfassung angeordnet ist.

16. Vorrichtung nach einem der vorangehenden Ansprüche, wobei die Kontaktzapfen eine direkte Zwischenverbindung der Mittel zum Durchführen einer optischen Erfassung und eines äußeren Lesers gestatten.

17. Verwendung einer Vorrichtung nach einem der vorangehenden Ansprüche zum Durchführen von biologischen Analysen.

## Claims

1. A biological analysis device including:
- means (60, 62, 64) for circulating a fluid to be analyzed, comprising a fluidic chamber,
Characterised it comprises:
- a substrate comprising a flow surface of a fluid and an opening (64),
- means (40) based on a semiconductor, to perform an optical detection, including a detection front face (50), intended to be in contact with the fluid to be analyzed in the fluidic chamber, a rear face (52) and pads (54, 70, 71, 72, 73) of electrical contacts located on this rear face and that appear on this rear face,
- the means to perform an optical detection being inserted in said opening (64), and being flush with the fluidic chamber at said flow surface of a fluid.

2. The device according to claim 1, the front face (50) being functionalized by biological and/or chemical probes.

3. The device according to claim 1 or 2, the means to perform an optical detection being fluorescence detection means.

4. The device according to claim 3, further including a wavelength filter.

5. The device according to claim 1 or 2, the means to perform an optical detection being means for detecting bioluminescence or chemiluminescence.

6. The device according to any of claims 1 to 5, including biological probes marked with an enzyme capable of emitting a photon upon contact with a specific molecule of a fluid to be analyzed.

7. The device according to any of claims 1 to 6, the front face of the means to perform an optical detection including an array of detection pixels.

8. The device according to claim 7, comprising electronic processing means at each pixel and/or the array.

9. The device according to any of claims 1 to 8, further including a passivation layer (87, 97) on the front face (50).

10. The device according to claim 9, the passivation layer being in silicon nitride or in silicon oxide.

11. The device according to any of the preceding claims, further including sealing means (41, 63) of the fluidic chamber, in an area in proximity to the means to perform an optical detection or in an area for inserting means to perform an optical detection into the chamber.

12. The device according to any of the preceding claims, the perimeter of the means (40) to perform an optical detection including supporting planes (140).

13. The device according to any of the preceding claims, the fluidic chamber including supporting planes (166).

14. The device according to any of the preceding claims, further including heating means on the side of the rear face (52) of the means (40) to perform an optical detection.

15. The device according to any of the preceding claims, further including a memory film positioned in contact with the pads (54, 70, 71, 72, 73) on the rear face of the means to perform an optical detection.

16. The device according to any of the preceding claims, the contact pads providing a direct interconnection of the means to perform an optical detection and of an external reader.

17. The use of a device according to any of the preceding claims for carrying out biological analyses.
